# EUROPÄISCHE PATENTANMELDUNG

(11) **EP 0 555 862 A1**
(43) Veröffentlichungstag der Anmeldung: **18.08.1993**
(21) Anmeldenummer: 93102190.1
(22) Anmeldetag: 12.02.1993
(51) Int. Cl.: A61C 13/265, A61C 13/277

(54) **Vorrichtung zum Befestigen eines abnehmbaren Zahnprothesenteils and einem festsitzenden Zahnprothesenteil**

(30) Priorität: 14.02.1992 DE 9201881 U
(71) Anmelder: FR- KONSTRUKTIONSELEMENTE FÜR ZAHNPROTHETIK GmbH & CO, D-67620 Kaiserslautern (DE)
(72) Erfinder: Klein, Franz Josef, D-8944 Grönenbach (DE); Mayer, Ralf, D-6750 Kaiserslautern (DE)
(74) Vertreter: Bernhardt, Winfrid, Dr.-Ing.

(57) **Zusammenfassung**

Die Vorrichtung weist eine an dem festsitzenden Zahnprothesenteil anzubringende Matrize (1) mit hinterschnittenem Hohlprofil (4) und eine an dem abnehmbaren Zahnprothesenteil anzubringende Patrize (11) mit als Gegenstück zu dem Hohlprofil (4) gestaltetem, axial in das Hohlprofil (4) einschiebbarem Profil (10) auf. Die Matrize (1) hat auf ihrer der Patrize (11) abgewandten Seite einen eingewölbten (2) Querschnitt. Ihr Hohlprofil ist in zwei einzelne Hohlprofile (4) aufgeteilt, die in den verschiedenen Querschnittshälften angeordnet sind. Die entsprechend den getrennten Hohlprofilen (4) der Matrize (1) getrennten Profile (10) der Patrize (11) sind über eine sie verbindende, an der Matrize (1) anliegende Querwand (8) hinaus als Anker (9) für die Verbindung mit dem abnehmbaren Zahnprothesenteil fortgesetzt.

## Beschreibung

Die Erfindung betrifft eine Vorrichtung zum Befestigen eines abnehmbaren Zahnprothesenteils an einem festsitzenden Zahnprothesenteil, die eine an dem festsitzenden Zahnprothesenteil anzubringende Matrize mit hinterschnittenem Hohlprofil und eine an dem abnehmbaren Zahnprothesenteil anzubringende Patrize mit als Gegenstück zu dem Hohlprofil gestaltetem axial in das Hohlprofil einschiebbarem Profil aufweist,
insbesondere mit einem von der Patrize aus in Endstellung hinter einem Gegenlager der Matrize einrastenden federnden Riegel, der durch eine an ihm und/oder dem Gegenlager befindliche Schrägfläche beim Abziehen des abnehmbaren Prothesenteils gegen seine Federkraft zurückschiebbar ist.

Eine solche Vorrichtung ist beispielsweise aus der DE-OS 34 19 359 bekannt.

Das Profil und das Hohlprofil der bekannten Vorrichtung sind ein T-Profil. Die Matrize erhält dabei die Form eines länglichen Kastens mit etwa rechteckigem Querschnitt. Sie wird in die Krone eines Pfeilerzahnes eingearbeitet, d.h. in der Regel eingegossen, während die Patrize an das Metallgerüst des abnehmbaren Zahnprothesenteils angesetzt, gleichfalls in der Regel angegossen, wird. Man nennt solche Vorrichtungen "Geschiebe".

Der Erfindung liegt die Aufgabe zugrunde, ein Geschiebe zu schaffen, das in der Richtung seiner Kraftübertragung weniger Platz beansprucht.

Gemäß der Erfindung wird dieser Zweck damit erfüllt, daß die Matrize auf ihrer der Patrize abgewandten Seite einen eingewölbten Querschnitt hat und ihr Hohlprofil in zwei einzelne Hohlprofile aufgeteilt ist, die in den verschiedenen Querschnittshälften angeordnet sind.

Der eingewölbte Querschnitt der Patrize paßt sich der normalen, gewölbten Oberfläche des zu überkronenden Stumpfes des Pfeilerzahnes an. Sie verlangt nicht, den Stumpf an dieser Seite weiter abzuschleifen, um Raum für die Matrize zu schaffen. Der nach der Erfindung wegfallende Platz für das bisherige T-Profil wird ersetzt durch die aus der Wölbung folgende Zunahme des Matrizenquerschnitts nach den beiden Seiten hin; hier werden nun die zwei getrennten Profile und Hohlprofile angeordnet.

Vorzugsweise haben die beiden Profile und Hohlprofile einen freien Abstand von der Mittellinie, der mindestens 1/4, vorzugsweise mehr als 1/3 des Abstandes von der Mittellinie bis zum Rand beträgt. Damit kommen die Hohlprofile in die äußeren, breiteren Bereiche des Matrizenquerschnitts.

Die entsprechend den getrennten Hohlprofilen der Matrize getrennten Profile der Patrize sind vorzugsweise über eine sie verbindende, an der Matrize anliegende Querwand hinaus als Anker für die Verbindung mit dem abnehmbaren Zahnprothesenteil fortgesetzt. Damit ergibt sich ein unmittelbarer, gradliniger Kräftefluß.

Die Profile und Hohlprofile weisen vorzugseise einen hakenförmigen Querschnitt auf, der bei geringem Querschnitt zu verhältnismäßig viel Kraftübertragung imstande ist.

Die Haken sollten gerundet sein, um Spannungsspitzen zu vermeiden, und entsprechend ihrer Beanspruchung sollte ihr Querschnitt zu ihrem Ende hin abnehmen.

Vorzugsweise sind die Haken um mehr als einen rechten Winkel gebogen. Die hakenförmigen Profile der Patrize und die damit sich ergebenden hakenförmigen Gegenprofile der Matrize ziehen sich dann bei Beanspruchung ineinander und verlangen keine Stützkräfte von außen, die spreizend auf die Matrize wirken.

Im Falle nach außen gebogener Haken erstreckt sich zweckmäßigerweise die genannte Querwand der Patrize in Anlage an der Matrize über die hakenförmigen Profile hinaus nach außen.

Sie stützt diese damit.

Insbesondere für einen eingangs genannten Riegel, der einchließlich einer Feder in einem flachen Hohlraum der Patrize sitzt und an dessen offener vorderer Schmalseite herausragt, sind nach innen gebogene Haken zweckmäßig; ohne Festigkeitsverlust an anderer Stelle können dann bloß die übergreifenden Abschnitte der Haken in der Verlängerung des Hohlraumes jeweils einen Ausschnitt erhalten, durch den hindurch die Feder mit dem Riegel eingeschoben und herausgenommen werden kann.

Um beim Eingießen den Verbund mit dem Gießkörper zu verbessern, weist die Matrize an ihren an die eingewölbte Seite anschließenden Seiten zweckmäßigerweise Einkerbungen und im übrigen eine rauhe Außenoberfläche auf im Gegensatz zu den Berührungsflächen mit der Patrize, die möglichst glatt sein und mit den Gegenflächen der Patrize eine möglichst lückenlose, spielfreie Berührung haben sollen. Entsprechendes gilt für die Patrize.

Die Zeichnungen geben Ausführungsbeispiele der Erfindung wieder.
- Fig. 1: zeigt eine Draufsicht auf ein Geschiebe mit Matrize und Patrize,
- Fig. 2: zeigt eine Seitenansicht der Patrize, an einer Einzelheit einen Längsschnitt,
- Fig. 3: zeigt eine isometrische Darstellung der Matrize,
- Fig. 4: zeigt die Draufsicht gemäß Fig. 1 mit eingezeichneten Einzelteilen und
- Fig. 5: zeigt eine Draufsicht auf ein anderes Geschiebe.

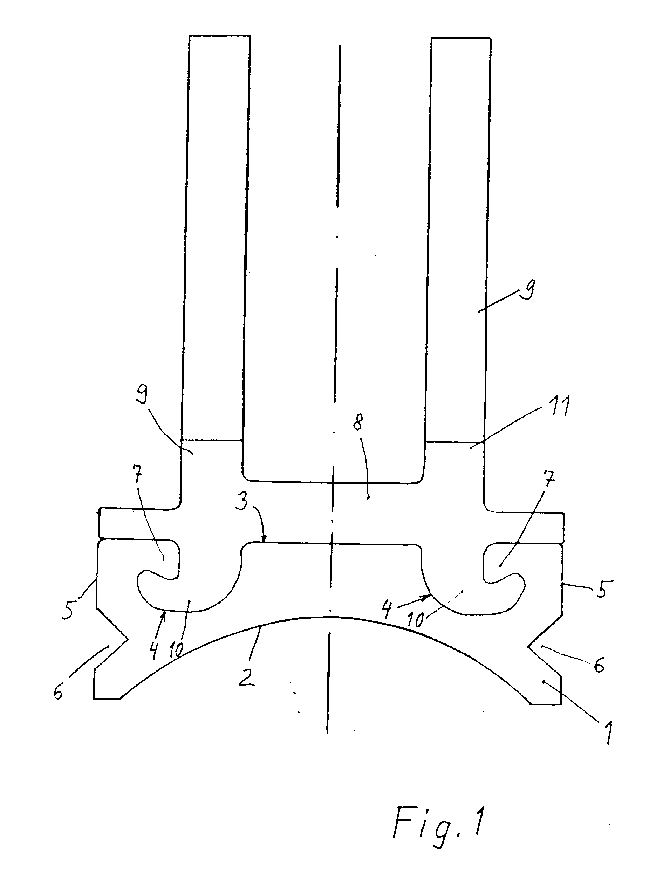

Die Matrize 1 des Geschiebes nach Fig. 1 bis 4 hat einen Querschnitt mit einer länglich-rechteckigen Umhüllenden, jedoch einer ausgeprägten Einwölbung 2 an der einen Längsseite. Die beiden Querschnittshälften sind bei dieser Ausbildung, grob betrachtet, zwei nach außen sich verbreiternde rechtwinklige Dreiecke oder Trapeze.
Näher den Außenseiten, wo in diesen Querschnittshälften mehr Platz ist, weist die Matrize 1 zwei von ihrer der Einwölbung 2 gegenüberliegenden ebenen Längsseite 3 ausgehende hakenförmige Hohlprofile 4 auf.
An ihren zu der Längsseite 3 rechtwinkligen schmaleren Seitenflächen 5 ist die Matrize 1 mit zwei Einkerbungen 6 versehen. Die Einkerbungen 6 sind so gelegt, daß sie die unter den hakenförmigen Hohlprofilen 4 verbleibenden Gegenhaken 7 nicht wesentlich schwächen.

Die Patrize 11 besteht aus zwei durch eine Querwand 8 verbundenen Wänden 9, die vor der Querwand 8 in hakenförmige Profile 10 übergehen. Die Profile 10 sind lückenlos in die Hohlprofile 4 passende Gegenstücke zu diesen. Die Patrize 11 wird in Längsrichtung der Profile 10 und Hohlprofile 4 in die Matrize 1 eingeschoben. Die Querwand 8 der Patrize liegt dann an der Längsseite 3 der Matrize an, und zwar auch an den Außenseiten der Wände 9 und Profile 10.

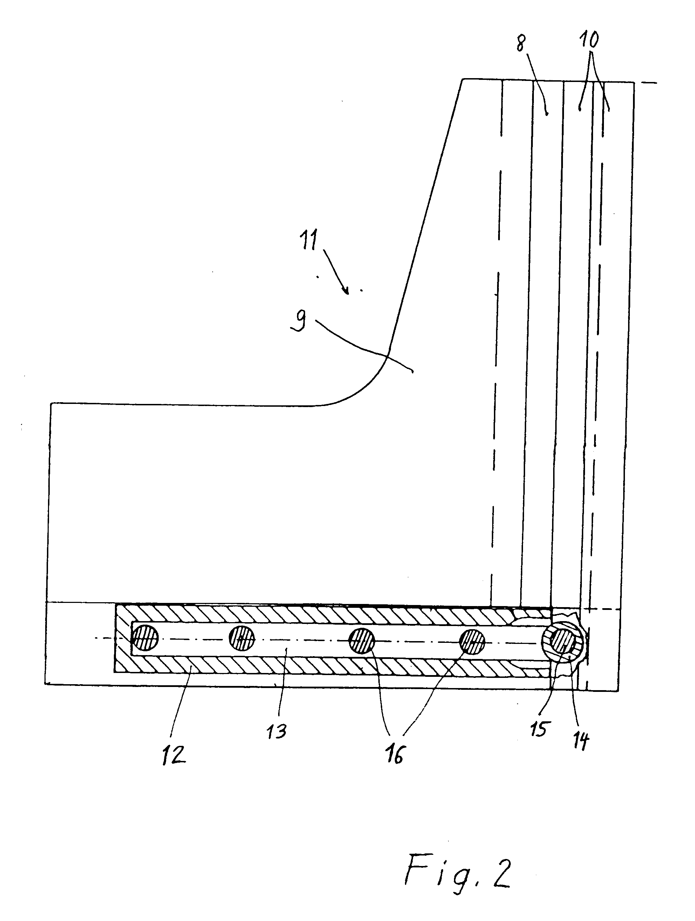

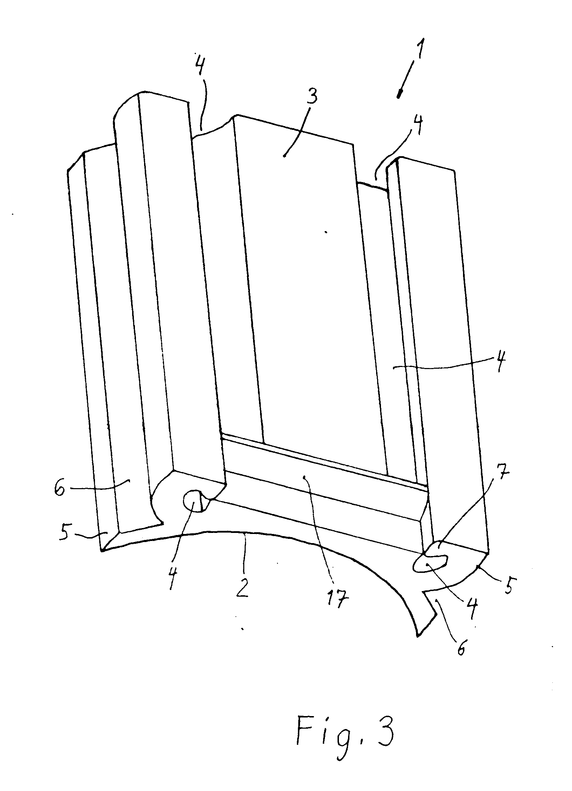

Wie in Fig. 2 dargestellt, ist unten an der Patrize 11 ein Kasten 12 mit einem Hohlraum 13 angebracht, in dem eine vorne in einen mit einer Rolle 14 besetzten Riegel 15 übergehende Feder 16 in einer nicht gezeichneten Kassette sitzt. Eine solche Anordnung ist aus den Gebrauchsmusterunterlagen G 91 11 059.9 ersichtlich.
Der Riegel 15 mit der Rolle 14 ist in seiner aus dem Kasten 12 herausragenden Normalstellung gezeichnet, kann aber unter Anspannung der Feder 16 vollständig in den Kasten 12 zurückgedrückt werden. Das geschieht beim Einschieben der Patrize 11 in die Matrize 1 sowie beim Herausziehen.
In der eingeschobenen Stellung rastet der Riegel 15 mit der Rolle 14 hinter einem in Fig. 3 erkennbaren, schrägen Gegenlager 17 der Matrize 1 ein. Die Schrägfläche des Gegenlagers 17 drückt beim Herausziehen der Matrize 11 den Riegel 15 mit der Rolle 14 wieder in den Kasten 12 zurück. Die Kraft der Feder 16 und der Winkel, unter dem die Schrägfläche des Gegenlagers 17 angeordnet ist, bestimmen die zum Abziehen des abnehmbaren Prothesenteils aufzuwendende Kraft.

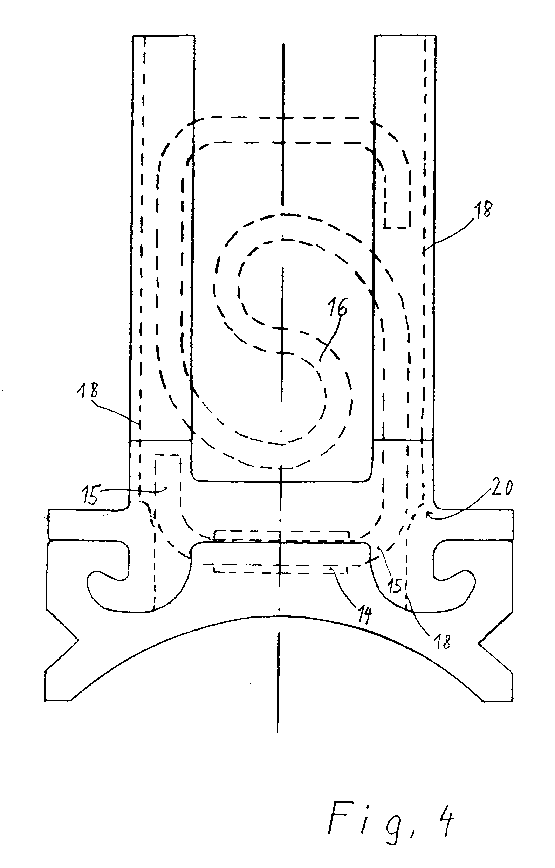

Fig. 4 läßt die Anordnung in der Draufsicht erkennen. Die Wände 9 und Profile 10 sind unten auf einer Höhe von etwas mehr als der Dicke des Kastens 12 entlang der gestrichelten Linien 18 ausgefräst; an dem damit geschaffenen Absatz 19 (Fig. 2) liegt der Kasten 12 an.
In Fig. 4 ist nur die Feder 16 mit dem Riegel 15 und der Rolle 14 gezeichnet. Die Seitenwände des Kastens 12 sind in dem schmalen Zwischenraum zwischen der Feder 16 und den gestrichelten Linien 18 zu denken. Von der Abknickung der Linien 18 an dem Pfeil 20 ab bis zur Vorderseite der Querwand 8 besteht dann der Kasten 12 nur noch aus dem Boden und der Decke, beide an den Ecken abgerundet. Hier reicht der Abstand zwischen den Linien 18 gerade, um die Feder 16 einzuschieben und herauszuziehen.

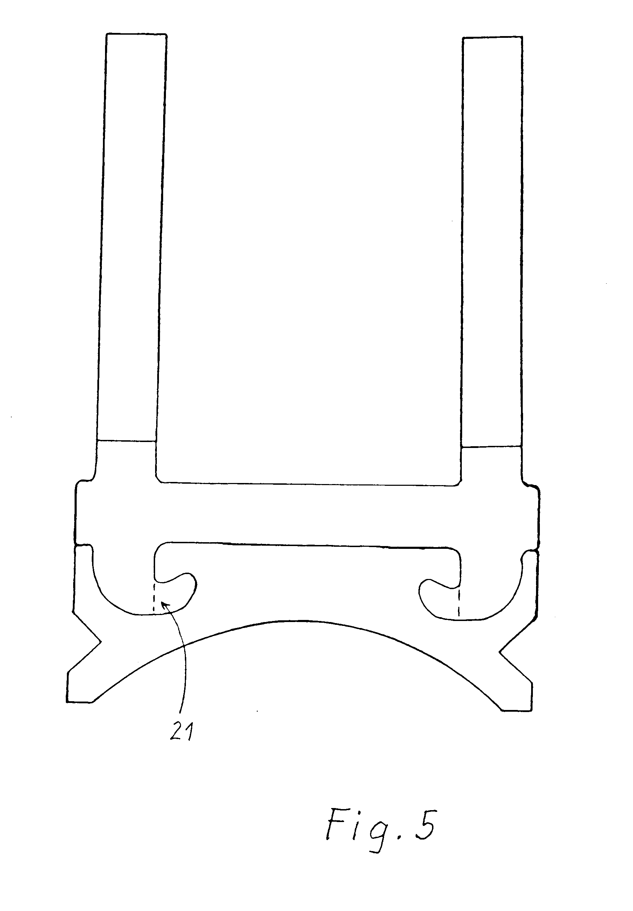

Das Geschiebe nach Fig. 5 würde eine breitere Feder erlauben.

Die Haken sind hier nach innen gebogen. Ihre Ansätze und die, wiederum in deren Verlängerung sich erstreckenden, Wände 9 liegen dadurch weiter auseinander. Der freie Abstand dazwischen steht als Breite der Feder zur Verfügung. Damit die Feder mit der erwähnten Kassette eingeschoben und herausgezogen werden kann, braucht nur an den überstehenden Abschnitten der Haken jeweils ein Ausschnitt von der Dicke der Kassette vorgesehen zu werden, wie bei 21 angedeutet.
Die Teile 12 bis 17 brauchten hier nicht unten, sondern könnten auch weiter oben in der Patrize 11 bzw. Matrize 1 angeordnet sein.

## Patentansprüche

1. Vorrichtung zum Befestigen eines abnehmbaren Zahnprothesenteils an einem festsitzenden Zahnprothesenteil, die eine an dem festsitzenden Zahnprothesenteil anzubringende Matrize (1) mit hinterschnittenem Hohlprofil (4) und eine an dem abnehmbaren Zahnprothesenteil anzubringende Patrize (11) mit als Gegenstück zu dem Hohlprofil (4) gestaltetem, axial in das Hohlprofil (4) einschiebbarem Profil (10) aufweist, insbesondere mit einem von der Patrize (11) aus in Endstellung hinter einem Gegenlager (17) der Matrize (1) einrastenden federnden Riegel (15), der durch eine an ihm und/oder dem Gegenlager (17) befindliche Schrägfläche beim Abziehen des abnehmbaren Prothesenteils gegen seine Federkraft (16) zurückschiebbar ist,
dadurch gekennzeichnet,
daß die Matrize (1) auf ihrer der Patrize (11) abgewandten Seite einen eingewölbten (2) Querschnitt hat und ihr Hohlprofil in zwei einzelne Hohlprofile (4) aufgeteilt ist, die in den verschiedenen Querschnittshälften angeordnet sind.

2. Vorrichtung nach Anspruch 1,
dadurch gekennzeichnet,
daß die beiden Hohlprofile (4) mit einem Abstand von der Mittellinie angeordnet sind, der mindestens 1/4, vorzugsweise mehr als 1/3,des Abstands von der Mittellinie bis zum Rand beträgt.

3. Vorrichtung nach Anspruch 1,
dadurch gekennzeichnet,
daß die entsprechend den getrennten Hohlprofilen (4) der Matrize (1) getrennten Profile (10) der Patrize (11) über eine sie verbindende, an der Matrize (1) anliegende Querwand (8) hinaus als Anker (9) für die Verbindung mit dem abnehmbaren Zahnprothesenteil fortgesetzt sind.

4. Vorrichtung nach einem der Ansprüche 1 bis 3,
dadurch gekennzeichnet,
daß die Profile (10) und Hohlprofile (4) einen hakenförmigen Querschnitt aufweisen.

5. Vorrichtung nach Anspruch 4,
dadurch gekennzeichnet,
daß die Haken (4;10) um mehr als einen rechten Winkel gebogen sind.

6. Vorrichtung nach Anspruch 4 oder 5,
dadurch gekennzeichnet,
daß die Haken (4;10) gerundet sind.

7. Vorrichtung nach einem der Ansprüche 4 bis 6,
dadurch gekennzeichnet,
daß die Haken (4;10) einen zu ihrem Ende hin abnehmenden Querschnitt aufweisen.

8. Vorrichtung nach einem der Ansprüche 3 bis 7,
dadurch gekennzeichnet,
daß im Falle nach außen gebogener Haken (4;10) die genannte Querwand (8) der Patrize (11) sich in Anlage an der Matrize (1) über die hakenförmigen Profile (10) hinaus nach außen erstreckt.

9. Vorrichtung nach einem der Ansprüche 1 bis 7,
dadurch gekennzeichnet,
daß der genannte Riegel (15) einschließlich einer Feder (16) in einem flachen Hohlraum (13) der Patrize (11) sitzt, an dessen offener vorderer Schmalseite er herausragt, und im Falle nach innen gebogener Haken die Haken in der Verlängerung des Hohlraumes ausgeschnitten (21) sind.

10. Vorrichtung nach einem der Ansprüche 1 bis 9,
dadurch gekennzeichnet,
daß die Matrize (1) an ihren an die eingewölbte Seite anschließenden Seiten (5) Einkerbungen (6) aufweist.
